# EUROPÄISCHE PATENTSCHRIFT

(11) **EP 2 054 206 B1**
(45) Veröffentlichungstag und Bekanntmachung des Hinweises auf die Patenterteilung: **06.04.2011**
(21) Anmeldenummer: 07722960.7
(22) Anmeldetag: 28.02.2007
(51) Int. Cl.: B29B 15/12, B29C 70/50, B29C 70/54, B32B 5/26, C08J 5/04

(54) **VERFAHREN ZUR HERSTELLUNG VON PREPREGS**
METHOD FOR PRODUCING PREPREGS
PROCÉDÉ DE FABRICATION DE PRÉIMPRÉGNÉS

(30) Priorität: 23.08.2006 DE 102006039444
(43) Veröffentlichungstag der Anmeldung: 06.05.2009
(73) Patentinhaber: Fenotec GmbH, 14547 Beelitz (DE)
(72) Erfinder: STAABS, Burkhard, 14473 Potsdam (DE)
(74) Vertreter: Jochem, Bernd
(86) Internationale Anmeldenummer: PCT/EP2007/001707
(87) Internationale Veröffentlichungsnummer: WO 2008/022659

(56) Entgegenhaltungen:
- WO-A-89/01125
- GB-A- 1 071 779
- US-A- 3 183 142

## Beschreibung

Die Erfindung betrifft ein Verfahren zur Herstellung von aus Kunstharz und Verstärkungsfasern bestehenden Prepregs mit bestimmten Umrissen.

Viele Bauteile bestehen heute aus Faserverbundwerkstoffen. Die dabei verwendeten Fasern haben die Funktion, die anliegenden Kräfte aufzunehmen. Die Fasern werden entsprechend der Lastlinien im Bauteil verlegt und durch ein Harz als Matrixmaterial an ihren Plätzen gehalten. Vor der Aushärtung ist das Matrixmaterial weich. Daher werden regelmäßig Formen benötigt, in denen der Aushärteprozess stattfinden kann.

Bei einem herkömmlichen Fertigungsverfahren werden die Verstärkungsfasern lose in die Form gelegt und dann mit dem Harz von Hand getränkt (Handauflegeverfahren). Durch den hohen Anteil an Handarbeit ist dieses Verfahren nicht nur zeit- und kostenintensiv, es hat auch den Nachteil, dass das Verhältnis zwischen Harz- und Faseranteil im fertigen Laminat nur bei großer Erfahrung der Laminierer konstant auf einem vorgegebenen Wert gehalten werden kann. Meistens werden diese Bauteile schwerer als nötig, oder es besteht die Gefahr von "trockenen Stellen" im Laminat oder von Lufteinschlüssen, die die Festigkeit deutlich schwächen können. Seit einigen Jahren gibt es Bestrebungen, die Qualität von derartigen Laminaten zu vergleichmäßigen und zu verbessern. Einer der Wege die dazu beschritten werden, führt über die sogenannten Prepregs. Dabei werden die Verstärkungsfasern als Materialbahn von Vorratsrollen abgewickelt und mit einem speziellen Harz, meistens einem Epoxydharz, getränkt, das bei Raumtemperatur nahezu fest ist und nur sehr langsam ausreagiert. Die Prepregs liegen dann zunächst in Form zusammengerollter Materialbahnen mit bis zu einem bestimmten Festigkeitsgrad verfestigtem Kunstharz vor. Heruntergekühlt auf -18°C sind diese Prepregs bis etwa 18 Monate haltbar. Sie können aber auch ungekühlt problemlos versandt werden, wenn die Weiterverarbeitung in Kürze folgt.

Beim Verarbeiter werden die Prepregs aus der Materialbahn auf die Abmessungen zugeschnitten, die für die unterschiedlichen Bauteile gebraucht werden, dann in die vorgesehenen Formen gelegt und in einem Ofen auf eine mittlere Temperatur aufgeheizt. Bei dieser Temperatur verflüssigt sich das Harz, und die verschiedenen Lagen verbinden sich miteinander. Um Lufteinschlüsse zu verhindern, werden die Bauteile regelmäßig unter Vakuum gesetzt. Danach erfolgt die Aushärtung bei nochmals erhöhter Temperatur.

Bei dem Zuschneiden der Prepregs aus der Materialbahn durch den Verarbeiter fallen regelmäßig 15 - 20 % Verschnitt an, die dann von Hand nach brauchbaren Stücken sortiert werden. Der Rest muss kostenintensiv als Sondermüll entsorgt werden.

Eine herkömmliche Anlage zur Herstellung von Prepregs besteht aus einer Abwicklereinheit, einer Imprägniereinheit, ggf. einer Trockeneinheit (bei Verwendung von Lösungsmittel enthaltenden Harzen), einer Kühleinheit und einer Aufwickeleinheit.

Das Fasermaterial wird in Form großer Rollen geliefert und durch die Abwicklereinheit der Maschine zugeführt. Ein Zwischenspeicher sorgt dafür, dass bei laufender Maschine Rollen gewechselt werden können. Es wird während einer Arbeitsschicht quasi endlos imprägniert. Die Fasern können entstaubt werden, das Flächengewicht kann gemessen werden.

In der Imprägniereinheit laufen die Fasern durch ein Bad mit dem durch Lösungsmittel oder erhöhte Temperatur niedrigviskos gemachten Harz und werden dort durchtränkt. Durch z. B. Abstreifer oder Andruckrollen mit einem steuerbaren Abstand wird der Anteil des zwischen den Fasern verbleibenden Harzes eingestellt.

In der Trockeneinheit wird durch Erhitzen das ggf. vorhandene Lösungsmittel abgedampft. Die Dimensionierung der Heizleistung der Trocknungseinheit hängt von der Verdampfungsenthalpie des verwendeten Lösungsmittels und der Durchlaufgeschwindigkeit der Fasern ab. Die Trockeneinheit und die Imprägniereinheit sind gekapselt, um das Austreten des Lösungsmittels in die Umwelt zu verhindern.

Unmittelbar nach der Trocknung bzw. bei Verwendung nicht lösungsmittelhaltiger Harze im Anschluss an den Imprägniervorgang werden die Prepregs in der Kühleinheit heruntergekühlt, um die bei der Erwärmung einsetzende Reaktion zu stoppen. Üblich ist, die Prepregs über gekühlte Walzen laufen zu lassen. Nach der Kühlung kann das Flächengewicht gemessen werden. Auf diese Weise lässt sich aus dem Vergleich des Flächengewichts vor und nach der Imprägnierung der Fasergehalt der Prepregs genau bestimmen.

In der Aufwickeleinheit werden die bahnenförmigen Prepregs zu Rollen gewickelt. Auch hier gibt es einen Zwischenspeicher, um Rollen bei laufender Maschine ablängen zu können. Später werden Prepreg-Teile mit den jeweils gewünschten Umrissen aus den bahnenförmigen Prepregs ausgeschnitten und dann weiter verarbeitet.

Es ist auch bereits aus der GB 1 071 779 bekannt, von Rollen abgezogene Verstärkungsfaserbahnen an ein umlaufend geführtes Metallband anzulegen, auf das zuvor Kunstharz aufgetragen worden ist. Diese Kunstharzschicht überträgt sich auf die Ober- bzw. Unterfläche der Verstärkungsfaserbahnen und sorgt für eine zuverlässige Überdeckung der außenliegenden Fasern. Nach dem Imprägnieren und Trocknen werden die Verstärkungsfaserbahnen wieder von dem Metallband abgelöst und aufgerollt oder quer durchtrennt in Form von Bahnabschnitten zwischengelagert.

Weiterhin ist aus der WO 89/01125 A1 bekannt, parallele Fasern oder Fäden auf eine Papier- oder Folienbahn zu legen, dann zu imprägnieren und nach dem Trocknen zusammen mit der Papier- oder Folienbahn aufzurollen. Später wird die mit einer Antihaftschicht versehene Papierbahn bzw. Folienbahn von der Prepreg-Bahn abgezogen, und dann werden daraus Prepregs bestimmter Form ausgeschnitten.

Gemäß der US 3 183 142 A werden aus imprägnierten, getrockneten Faserbahnen auch streckbare Isolierbänder hergestellt. Dabei wird eine Trägerfolie aus Kunststoff benutzt, die später von den imprägnierten Faserbahnen abgelöst wird.

Sämtlichen vorgenannten Verfahren ist gemeinsam, dass Verstärkungsfaserbahnen ohne oder mit einem Trägerband durch eine Imprägniereinrichtung und eine Trocknungsanlage laufen. Wenn die Bänder nicht in Bandform weiterverarbeitet werden, erfolgt das Ausschneiden einzelner Prepregs aus der Faserbahn erst nach dem Imprägnieren, Trocknen und Ablösen von einem gegebenenfalls benutzten Trägerband. Daher besteht auch bei den zuletzt beschriebenen Verfahren das oben geschilderte Abfallproblem.

Der Erfindung liegt die Aufgabe zugrunde, die Kosten für Verschnitt und Abfall zu minimieren, und diese Aufgabe wird erfindungsgemäß durch das im Anspruche gekennzeichnete Verfahren gelöst.

Die Erfindung sieht die Herstellung von bereits beim Verfestigen des Harzes nach dem Imprägniervorgang stückweise mit bestimmten Umrissen vorliegenden Prepregs vor, die beim Kunden nicht mehr aus einer Prepregbahn ausgeschnitten werden müssen, sondern nach dem Ausscheiden aus dem Trägernetz direkt in die Form gelegt werden können. Im Vergleich zu dem bisher anfallenden Verschnitt von 15 - 20 % ergibt sich der wirtschaftliche Vorteil für den Verarbeiter unmittelbar. Da die Fasern vor dem Tränken geschnitten werden, ist der dabei anfallende Verschnitt kein Sondermüll, sondern kann als Rohstoff weiter verkauft und verwendet werden.

Im Unterschied zu einer konventionellen Imprägnieranlage laufen nicht die Verstärkungsfasern in Form von Bahnen durch die Anlage, sondern Trägernetzbahnen aus geeignetem, kostengünstigen Material. Die zu tränkenden Faserformteile werden auf dieses Trägernetz aufgelegt, aufgeheftet oder aufgeklebt und später mit seiner Hilfe auf Rollen gewickelt. Durch eine geeignete Reihenfolge der Zuschnitte kann auf die Verarbeitungsreihenfolge beim Kunden Rücksicht genommen werden.

Das erfindungsgemäß vorgeschlagene, neue Verfahren wird auf einer Anlage ausgeführt, die aus folgenden Einheiten besteht: einer Abwicklereinheit Fasern, einer Zuschnittseinheit Faserformteile, einer Abwicklereinheit Trägernetz, einer Vorimprägniereinheit Trägernetz, einer Einheit zur Zusammenführung von Faserformteilen und Trägernetz, einer Trocknungseinheit Trägernetz, einer Kühlungseinheit Trägernetz, einer Imprägniereinheit Prepreg, einer Trocknungseinheit Prepreg, einer Kühlungseinheit Prepreg und einer Aufwickeleinheit.

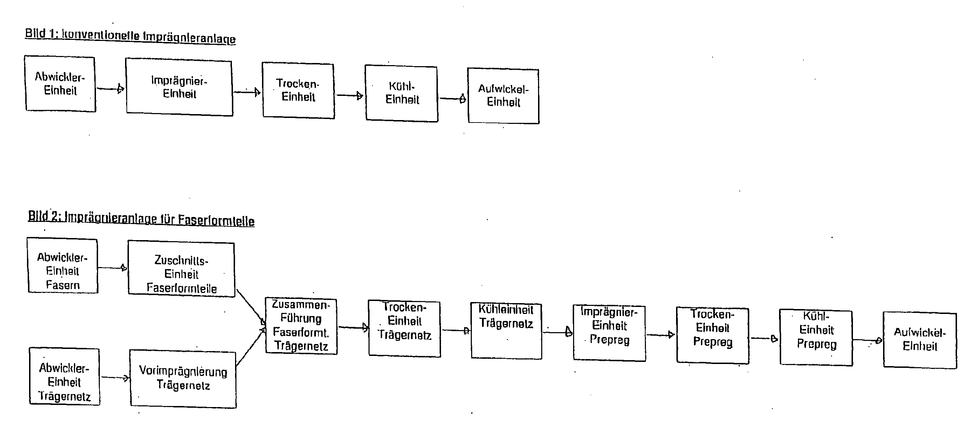

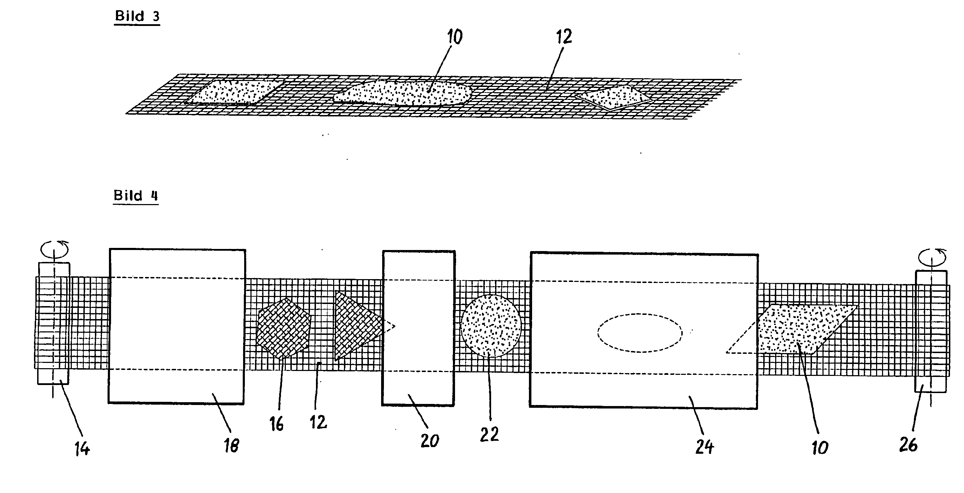

In der beigefügten Zeichnung ist der Aufbau der neuen Imprägnieranlage gemäß Bild 2 dem Aufbau einer herkömmlichen Imprägnieranlage gemäß Bild 1 gegenübergestellt. Bild 3 und Bild 4 veranschaulichen den Transport der Faserformteile und Prepregs auf dem Trägernetz. Die Funktionen der vorstehend genannten einzelnen Einheiten der neuen Anlage sind wie folgt zu erläutern:
In der Abwicklereinheit Fasern werden die Verstärkungsfasern von den Rollen abgewickelt und der Zuschnittseinheit zugeführt. Ein Zwischenspeicher sorgt dafür, dass bei laufender Maschine Rollen gewechselt werden können.
In der Zuschnittseinheit werden die Verstärkungsfasern, z. B. Carbon- oder Aramidfasern, durch eine Schneideinrichtung zu Faserformteilen mit bestimmten Umrissen zugeschnitten. Welcher Art die Schneideinrichtung ist, ist für die Erfindung unerheblich. Vorzugsweise kommen Schneidmesser, Laser- oder Plasmaschneider zum Einsatz, da der Einsatz von Wasserstrahlschneidern zu Restfeuchte in den Fasern führen könnte, die vor der Weiterbehandlung erst abgedampft werden müsste. Die geschnittenen Faserformteile können z. B. durch ionisierte Luft von Faserresten befreit werden.

Die Abwicklereinheit für das Trägernetz entspricht prinzipiell der Abwicklereinheit einer konventionellen Imprägnieranlage für die Faserbahn.

In der Einheit für die Vorimprägnierung des Trägernetzes wird dieses mit einem schnell härtenden, aber nach Aushärtung dauerelastisch bleibenden, hochviskosen Klebeharz, z. B. einem Epoxid- oder Polyurethanharz, imprägniert. Wegen der geringen Kräfte, denen das Trägernetz standhalten muß (ca. 50 N/5 cm), kann das Trägernetz mit großer Maschenweite und geringer Fadendicke gefertigt sein, so dass nur eine geringe Überdeckung der Faserformteile von z. B. höchstens 5 % erreicht wird (ca. 3 bis 4 %), die den Verbund der späteren Prepregs nicht beeinträchtigt.

An der Stelle der Zusammenführung der Faserformteile mit dem Trägernetz werden die Faserformteile auf das kontinuierlich oder schrittweise durchlaufende, mit Klebeharz imprägnierte Trägernetz aufgewalzt und weitergeleitet.

In der Trocknungseinheit Trägernetz wird das die Faserformteile fixierende Klebeharz wenigstens teilweise ausgehärtet. Es ist für die Erfindung unerheblich, ob dies durch Wärme oder z. B. durch UV-Licht geschieht. Bei der Verwendung von UV-Licht wird die nachfolgende Kühlungseinheit Trägernetz überflüssig, in der im Ausführungsbeispiel das Trägernetz mit den aufgeklebten Faserformteilen wieder auf Raumtemperatur heruntergekühlt wird, damit Normalbedingungen für den Hauptimprägnierungsprozess geschaffen werden.

Abweichend von diesem Ausführungsbeispiel könnten die Faserformteile auch mit Fadenschlingen oder Klammern am Trägernetz fixiert werden, so dass das Vorimprägnieren und Trocknen des Netzes entfällt. In Abhängigkeit vom Verlauf des Trägernetzes und der Ausführung des Imprägniervorgangs, z. B. bei horizontalem Verlauf und Imprägnierung durch einen Gieß- oder Sprühvorgang kann es sogar genügen, die Faserformteile unfixiert auf das Trägernetz aufzulegen. Diese Möglichkeit könnte auch dann bestehen, wenn mit einem Tauchbad imprägniert wird und in diesem Bereich die Faserformteile von einem über dem Trägernetz angeordneten, mit gleicher Geschwindigkeit angetriebenen, endlos umlaufenden Netzband gegen das Trägernetz angedrückt werden.

Die Imprägniereinheit Prepreg, die im Ausführungsbeispiel vorhandene Trocknungseinheit Prepreg, die Kühlungseinheit Prepreg und die Aufwickeleinheit entsprechen den Einheiten einer konventionellen Anlage. Da bei gleicher Durchlaufgeschwindigkeit der Faserformteile wie bei einer herkömmlichen Anlage weniger Material durch die Trocknungseinheit durchgeleitet wird, kann sie normalerweise mit geringerer Leistung gefahren werden. Die Imprägniereinheit ist vorzugsweise ein z. B. durch Lösungsmittel niedrigviskos eingestelltes, Epoxid- oder Polyurethanharz enthaltendes Bad, durch das das Trägernetz mitsamt den darauf fixierten Faserformteilen gezogen wird. Unmittelbar anschließend kann z. B. durch Abstreifer oder Andruckrollen überschüssiges Harz von den Faserformteilen abgestreift werden, um ein bestimmtes Verhältnis der Anteile von Fasern und Harz in den Prepregs einzustellen.

Obgleich die erfindungsgemäß hergestellten Prepregs von Anfang an mit bestimmten Umrissen geformte Einzelteile sind, können sie in der Aufwickeleinheit mittels des Trägernetzes in einfacher Weise auf kleinem Raum zu einer Rolle zusammengefasst und in dieser Form gelagert und transportiert werden. Das Abtrennen von dem Trägernetz erfolgt zweckmäßigerweise erst am Ort der Weiterverarbeitung. Es kann z. B. durch Ausschneiden, Ausbrennen oder in anderer geeigneter Weise erfolgen. Durch besondere Maßnahmen, wie z. B. Abstandhalter zwischen den Faserformteilen und dem Trägernetz und/oder Wahl eines vom Harz nicht benetzbaren Materials für das Trägernetz, kann im Einzelfall erreicht werden, dass die Prepregs nicht nur von dem sie umgebenden, sondern auch von dem durch sie überdeckten Bereich des Trägernetzes gelöst werden können.

Bild 3 veranschaulicht in einer perspektivischen Seitenansicht den Transport unterschiedlich geformter Prepregs 10 auf dem Trägernetz 12 im Bereich zwischen der Trockeneinheit und der Aufwickeleinheit.

Bild 4 ist eine vereinfachte Draufsicht auf die Produktionsanlage. Dabei ist die Abwickler-Einheit Trägernetz mit 14 bezeichnet und die Einheit, in der Faserformteile 16 des jeweils gewünschten Zuschnitts einzeln mit dem Trägernetz 12 zusammengeführt werden, mit dem Bezugszeichen 18. Die z. B. mit dem Trägernetz 12 verklebten Faserformteile 16 durchlaufen dann die Imprägniereinheit 20, so dass hinter dieser ein auf dem Trägerband 12 liegendes, mit Kunstharz durchtränktes Faserformteil 22 erscheint. Dieses wird anschließend in der Trocken-Einheit 24 getrocknet und ggf. gekühlt, so dass danach die fertigen Prepregs 10 zur Aufwickel-Einheit 26 weitertransportiert und dort zusammen mit dem Trägernetz 12 zusammengerollt werden können. Im Interesse der Übersichtlichkeit sind in Bild 4 die vorstehend nicht erwähnten, aber in Bild 2 gezeigten Produktionseinheiten nicht dargestellt worden.

## Patentansprüche

1. Verfahren zur Herstellung von aus Kunstharz und Verstarkungsfasern bestehenden Prepregs mit bestimmten Umrissen, **dadurch gekennzeichnet, dass** Faserformteile (16), bestehend aus wenigstens einer Lage Verstarkungsfasern, mit Umrissen erzeugt werden, die den Umrissen der herzustellenden Prepregs (10) entsprechen, die Faserformteile (16) auf ein Trägernetz (12) gelegt und mit Harz durchtränkt werden, das anschließend auf den für Prepregs erforderlichen Festigkeitsgrad verfestigt wird, und schließlich die mit den vorbestimmten Umrissen erhaltenen Prepregs (10) mitsamt dem jeweils von ihnen überdeckten Bereich des Trägernetzes (12) von dem sie umgebenden Teil des Trägernetzes (12) abgetrennt werden.

2. Verfahren nach Anspruch 1, **dadurch gekennzeichnet, dass** das Trägernetz (12) vor dem Auflegen der Faserformteile (16) mit einem Harz vorimprägniert wird, das nach dem Auflegen und Andrücken der Faserformteile (16) wenigstens teilweise ausgehärtet wird, so dass sie mit dem Trägernetz (12) verklebt werden.

3. Verfahren nach Anspruch 2, **dadurch gekennzeichnet, dass** für die Vorimprägnierung des Trägernetzes (12) ein schnell härtbares, nach Aushärtung dauerelastisches Klebeharz, z. B. ein Epoxid- oder Polyurethanharz verwendet wird.

4. Verfahren nach einem der Ansprüche 1 bis 3, **dadurch gekennzeichnet, dass** für die Imprägnierung der Faserformteile (16) ein durch Lösungsmittel niedrigviskos eingestelltes Harz, z. B. Epoxid- oder Polyurethanharz, verwendet wird, das nach dem Durchtränken der Faserformteile (16) durch Erhitzen und Verdampfen des Lösungsmittels getrocknet und anschließend gekühlt wird.

5. Verfahren nach einem der Ansprüche 1 bis 4, **dadurch gekennzeichnet, dass** die Verstärkungsfasern und das Trägernetz (12) kontinuierlich oder schrittweise von Vorratsrollen (14) abgezogen werden und das Vorimprägnieren des Trägernetzes (12) sowie das Imprägnieren der Faserformteile (16) fortlaufend während des Abziehens des Trägernetzes (12) von seiner Vorratsrolle (14) oder von einem Zwischenspeicher stattfinden.

6. Verfahren nach einem der Ansprüche 1 bis 5, **dadurch gekennzeichnet, dass** die Faserformteile (16) mittels eines Schneidmessers oder Strahlschneidwerkzeugs aus wenigstens einer von einer Vorratsrolle abgezogenen Faserbahn ausgeschnitten werden.

7. Verfahren nach einem der Ansprüche 1 bis 6, **dadurch gekennzeichnet, dass** die Faserformteile (16) durch ionisierte Luft von Faserresten befreit werden.

8. Verfahren nach einem der Ansprüche 1 bis 7, **dadurch gekennzeichnet, dass** zum Durchtränken der Faserformteile (16) mit Harz das Trägernetz (12) durch ein das Harz enthaltendes Bad (20) gezogen wird.

9. Verfahren nach einem der Ansprüche 1 bis 8, **dadurch gekennzeichnet, dass** ein Trägernetz (12) verwendet wird, dessen Maschenweite und Fadendicke so bemessen sind, dass die Faserformteile (16) von dem Trägernetz (12) nur zu höchstens 5 % überdeckt werden.

10. Verfahren nach einem der Ansprüche 1 bis 9, **dadurch gekennzeichnet, dass** das Trägernetz (12) mit den darauf geklebt gehaltenen Prepregs (10) zu deren Lagerung und Transport zum Ort des Ausschneidens aus dem Trägernetz (12) und der Weiterverarbeitung zusammengerollt wird.

## Claims

1. A method for producing prepregs consisting of synthetic resin and reinforcement fibers, having defined contours, **characterized in that** structural fiber elements (16), consisting of at least one layer of reinforcement fibers, are produced with contours corresponding to the contours of the prepregs (10) to be produced, that the structural fiber elements (16) are placed on a carrier net (12) and are saturated with a resin, which is subsequently cured to the degree of strength required for prepregs, and that finally the prepregs (10) obtained and having the predetermined contours, together with the areas of the carrier net (12) respectively covered by them, are separated from the portion of the carrier net (12) surrounding them.

2. The method in accordance with claim 1, **characterized in that** prior to placing the structural fiber elements (16) on it, the carrier net (12) is pre-impregnated with a resin which is at least partially cured after the structural fiber elements (16) have been placed on and pressed against it, so that they are glued together with the carrier net (12).

3. The method in accordance with claim 2, **characterized in that** an adhesive resin, for example an epoxy resin or a polyurethane resin, which can be rapidly cured and is permanently elastic after curing, is employed for pre-impregnating the carrier net (12).

4. The method in accordance with one of claims 1 to 3, **characterized in that** for impregnating the structural fiber elements (16) a resin, which has been set to have low viscosity by means of a solvent, for example an epoxy resin or a polyurethane resin, is employed and, following the saturation of the structural fiber elements (16), is dried by heating and evaporating the solvent and is subsequently cooled.

5. The method in accordance with one of claims 1 to 4, **characterized in that** the reinforcement fibers and the carrier net (12) are drawn off supply rolls (14) continuously or in steps, and pre-impregnation of the carrier net (12), as well as the impregnation of the structural fiber elements (16), takes place continuously in the course of drawing the carrier net (12) off its supply roll (14) or out of an intermediate storage device.

6. The method in accordance with one of claims 1 to 5, **characterized in that** the structural fiber elements (16) are cut out of at least one web of fibers drawn off a supply roll by means of a cutting knife or a beam cutting tool.

7. The method in accordance with one of claims 1 to 6, **characterized in that** the structural fiber elements (16) are freed of fiber residue by means of ionized air.

8. The method in accordance with one of claims 1 to 7, **characterized in that**, for saturating the structural fiber elements (16) with resin, the carrier net (12) is drawn through a bath (20) containing the resin.

9. The method in accordance with one of claims 1 to 8, **characterized in that** a carrier net (12) is used, whose mesh width and fiber thickness are of such size that the structural fiber elements (16) are covered to at most 5%.

10. The method in accordance with one of claims 1 to 9, **characterized in that** the carrier net (12) with the prepregs (10) held thereon adhesively is rolled up for storage and transport of the latter to the location where they are cut out of the carrier net (12) and further processed.

## Revendications

1. Procédé de fabrication de composants préimprégnés formés de résine synthétique et de fibres de renforcement et ayant des contours définis,
procédé **caractérisé en ce qu'**
on réalise des parties façonnées de fibres (16) composées d'au moins une couche de fibres de renforcement avec des contours correspondant aux contours des composants préimprégnés (10) à réaliser, les parties façonnées de fibres (16) sont placées sur un filet de support (12) et sont imprégnées de résine qui est ensuite solidifiée au degré de solidité nécessaire aux composants préimprégnés puis, les composants préimprégnés (10), obtenus, avec le contour prédéfini, sont séparés avec la zone du filet de support (12) qu' ils couvrent, par rapport à la partie environnante du filet de support (12).

2. Procédé selon la revendication 1,
**caractérisé en ce qu'**
avant d'appliquer les parties façonnées de fibres (16), on préimprègne le filet de support (12) avec une résine qui, après mise en place et application sous pression des parties façonnées de fibres (16), durcit au moins en partie de façon à les coller au filet de support (12).

3. Procédé selon la revendication 2,
**caractérisé en ce qu'**
on utilise une résine adhésive, durcissable rapidement, ayant une élasticité permanente après durcissement, par exemple une résine époxyde ou une résine de polyuréthane pour préimprégner le filet de support (12).

4. Procédé selon l'une des revendications 1 à 3,
**caractérisé en ce que**
pour la préimprégnation des parties façonnées de fibres (16), on utilise une résine rendue faiblement visqueuse par un solvant, par exemple une résine époxyde ou une résine de polyuréthane et après imprégnation des parties façonnées en fibres (16) on sèche par chauffage et évaporation du solvant et ensuite on refroidit.

5. Procédé selon l'une des revendications 1 à 4,
**caractérisé en ce que**
les fibres de renforcement et le filet de support (12) sont dévidés en continu ou pas à pas de bobines d'alimentation (14) et la préimprégnation du filet de support (12), ainsi que l'imprégnation des parties façonnées en fibres (16) se font en continu au cours du dévidage du filet de support (12) de sa bobine d'alimentation (14) ou d'un réservoir intermédiaire.

6. Procédé selon l'une des revendications 1 à 5,
**caractérisé en ce que**
les parties façonnées en fibres (16) sont découpées à l'aide d'un couteau ou d'un outil de coupe par jet, dans au moins une bande de fibres dévidée d'une bobine d'alimentation.

7. Procédé selon l'une des revendications 1 à 6,
**caractérisé en ce que**
on évacue les résidus de fibres des pièces façonnées en fibres (16) par de l'air ionisé.

8. Procédé selon l'une des revendications 1 à 7,
**caractérisé en ce qu'**
on tire le filet de support (12) à travers un bain (20) contenant la résine pour imprégner les parties formées de fibres (16) avec la résine.

9. Procédé selon l'une des revendications 1 à 8,
**caractérisé en ce qu'**
on utilise un filet de support (12) dont les mailles et l'épaisseur du fil sont dimensionnées pour que les parties façonnées en fibres (16) soient couvertes seulement au maximum jusqu'à 5 % par le filet de support (12).

10. Procédé selon l'une des revendications 1 à 9,
**caractérisé en ce qu'**
on enroule le filet de support (12) avec les composants préimprégnés (10), tenus collés sur le filet pour leur stockage et leur transport jusqu'à l'endroit de la découpe dans le filet de support (12) et pour la suite des opérations.
